# EUROPEAN PATENT APPLICATION

(11) **EP 2 746 458 A1**
(43) Date of publication of application: **25.06.2014**
(21) Application number: 12199333.1
(22) Date of filing: 24.12.2012
(51) Int. Cl.: D06F 58/28

(54) **A method for controlling a laundry drying machine and a corresponding laundry drying machine**

(71) Applicant: Electrolux Home Products Corporation N.V., 1130 Brussel (BE)
(72) Inventor: Cavarretta, Francesco, 33080 Porcia (PN) (IT)
(74) Representative: Nardoni, Andrea

(57) **Abstract**

The present invention relates to a method for controlling a laundry drying machine (1) of the type comprising a heat pump system (20) having a refrigerant circuit (30) for a refrigerant and comprising a drying air circuit (10) for conveying a volume flow of drying air (A) in a laundry drum (9) suitable for receiving laundry. The refrigerant circuit (30) comprises a compressor (24) with a variable rotation speed (Cs), a first heat exchanger (21) for a thermal coupling between the drying air circuit (10) and the refrigerant circuit (30), a second heat exchanger (23) for a further thermal coupling between the drying air circuit (10) and the refrigerant circuit (30). The method comprises the steps of controlling the speed (Cs) or the power (Cp) of the compressor (24) and controlling the volume flow of the drying air (A) in response to the speed (Cs) or the power (Cp) of the compressor (24).

## Description

The present invention concerns the field of laundry drying techniques.

In particular, the present invention refers to a laundry drying machine equipped with a heat pump system and, more in particular, a method for controlling such a laundry drying machine.

### BACKGROUND ART

Laundry treating machines capable of carrying out a drying process on laundry, hereinafter simply indicated as laundry dryers, generally comprise a casing that houses a laundry container, like a rotating drum, where laundry to be treated is received. A closed air stream circuit carries out drying operation by circulating hot air through the laundry container containing the wet laundry.

In laundry dryers, the heat pump technology is the most efficient way to save energy during drying operation. In conventional heat pump laundry dryers a drying air stream flows in a close loop. The air passes through the laundry drum and removes water from wet clothes. Then the drying air stream is cooled down and dehumidified and then heated up in a heat pump system and finally reinserted again into the laundry drum.

The heat pump system comprises a refrigerant flowing in a closed-loop refrigerant circuit constituted by a compressor, a condenser, an expansion device and an evaporator. The condenser heats up the drying air while the evaporator cools and dehumidifies the drying air leaving the drum. The refrigerant flows in the refrigerant circuit where it is compressed by the compressor, condensed in the condenser, expanded in the expansion device and then vaporized in the evaporator. The temperatures of the drying air stream and the refrigerant are strongly correlated to each other.

The drying air stream is typically moved by air conveyance means, usually constituted of a fan arranged along the closed-loop air stream circuit. Eventually, the volume flow of the drying air conveyed into the drum is set according to the fan speed.

In laundry dryers of know type, the volume flow and eventually the fan speed is opportunely controlled according to one or more parameters.

A laundry dryer of this type is disclosed in CH701466A2.

Here the laundry dryer comprises a heat pump system and a closed-loop air stream circuit. The volume flow is determined by a fan.

In said laundry dryer, the volume flow is increased and or reduced according to different parameters, like the dryness of drying air and laundry or the drying program selected by the user.

Furthermore, in said laundry dryer the adaptation of the drum rotation or of the heat pump performance to the volume flow is also provided. In particular, the adaptation of the drum rotation to the volume flow or adaptation of the heat pump performance to the volume flow are disclosed.

The laundry dryer above described belonging to the known technique, however, poses some drawbacks.

A first drawback posed by this known technique is constituted by the fact that the efficiency of the system during the drying cycle is not optimized.

A further drawback posed by this known technique is constituted by the fact that the efficiency of the system is not optimized when one or more parameters change during the drying cycle, in particular when the heat pump performance changes during the drying cycle.

The aim of the present invention is therefore to solve the noted drawbacks and thus providing a laundry drying machine having an improved drying cycle performance.

It is an object of the present invention to provide a method for controlling a drying cycle of a laundry drying machine which allow an additional saving of energy during the drying cycle.

It is a further object of the invention to provide a method for controlling a drying cycle of a laundry drying machine which is easily adaptable to suit new conditions during the drying cycle.

### DISCLOSURE OF INVENTION

The applicant has found that by providing a method for controlling a laundry drying machine of the type comprising a heat pump system having a refrigerant circuit for a refrigerant and comprising a drying air circuit for conveying a volume flow of drying air in a laundry drum suitable for receiving laundry to be dried, wherein the refrigerant circuit comprises a compressor with a variable rotation speed and by providing the steps of controlling the volume flow of the drying air in response to the speed or the power of the compressor, it is possible to save energy during the drying cycle.

In a first aspect the present invention relates, therefore, to a method for controlling a laundry drying machine of the type comprising a heat pump system having a refrigerant circuit for a refrigerant and comprising a drying air circuit for conveying a volume flow of drying air in a laundry drum suitable for receiving laundry to be dried, said refrigerant circuit comprising:
- a compressor with a variable rotation speed;
- a first heat exchanger for a thermal coupling between said drying air circuit and said refrigerant circuit wherein the temperature of said drying air increases and the temperature of said refrigerant decreases; and
- a second heat exchanger for a further thermal coupling between said drying air circuit and said refrigerant circuit wherein the temperature of said drying air decreases and the temperature of said refrigerant increases;
   wherein the method comprises the steps of:
   - controlling the speed or the power of said compressor;
   - controlling said volume flow of said drying air in response to said speed or said power of said compressor.

Preferably, the step of controlling the volume flow of drying air comprises the step of increasing the volume flow of drying air if the speed or the power of the compressor increases.

Preferably, the step of controlling the volume flow of drying air comprises the step of decreasing the volume flow of drying air if the speed or the power of the compressor decreases.

In a preferred embodiment of the invention, the step of controlling the volume flow of drying air comprises the step of conveying a first volume flow of drying air in the drying air circuit if the speed or the power of the compressor is lower than a predetermined threshold value and conveying a second volume flow of drying air if the speed or the power of the compressor is higher than, or equal to, the predetermined threshold value, wherein the first volume flow of drying air is lower than the second volume flow of drying air.

In a further preferred embodiment of the invention, two or more ranges for the speed or the power are defined and corresponding two or more values for the volume flow of drying air are set, wherein if the speed or the power of the compressor is comprised in a first range which has smaller values than the values of a second range then the correspondent first value of the volume flow is set at a value smaller than the value of the correspondent second value of the volume flow.

Preferably, the step of controlling the volume flow of the drying air comprises the step of controlling a conveying device arranged in the drying air circuit. More preferably, the step of controlling the volume flow of the drying air comprises the step of controlling the speed of a fan arranged in the drying air circuit.

Preferably, the step of controlling the speed or the power of the compressor comprises the step of driving the compressor according to a course of the speed or of the power.

For the purpose of the present invention, by "course" it is meant a trend over the time; thus, for example, "compressor speed course" means a trend over time of the compressor speed and "fan speed course" means a trend over time of the fan speed.

In a preferred embodiment of the invention, the step of driving the compressor according to a course of the speed or of the power comprises the step of driving the compressor according to a predetermined course of the speed or of the power. In preferred embodiments of the invention, said predetermined course may be selected:
- at the beginning of the drying cycle;
- within a predetermined time interval at the beginning of the drying cycle;
- before the activation of the compressor;
- after the activation of the compressor.

In preferred embodiments of the invention, the course is determined on the base of:
- the drying cycle selected by the user through a user control interface;.
- the type of laundry textile to dry;
- the dryness degree of the laundry which is expected at the end of the drying cycle;
- the humidity degree of the laundry at the beginning of the drying cycle;
- the amount of load inside the drum;
- the ambient temperature at the beginning of the drying cycle.

In preferred embodiment of the invention, the step of driving the compressor according to a course of the speed or of the power comprises the step of driving the compressor according to a course of the speed or of the power which is adjusted during the drying cycle.

In other preferred embodiments of the invention, the step of adjusting the course of the speed or of the power during the drying cycle is based on the refrigerant temperature and/or pressure in the refrigerant circuit.

More preferably the step of adjusting the course of the speed or of the power during the drying cycle is based on the refrigerant temperature and/or pressure in the high-pressure side of the refrigerant circuit.

In a preferred embodiment of the invention, the step of adjusting the course of the speed or of the power during the drying cycle is based on the refrigerant temperature and/or pressure at the compressor outlet or at the first heat exchanger output.

In a further preferred embodiment of the invention, the step of adjusting the course of the speed or of the power during the drying cycle is based on the refrigerant temperature and/or pressure at the input of expansion device of the refrigerant circuit.

Preferably, the step of adjusting the course of the speed or of the power during the drying cycle is carried out in order to maintain the refrigerant temperature and/or the pressure within a predetermined range during the drying cycle.

In further embodiments, the step of adjusting the course of the speed or of the power during the drying cycle is carried out in order to determine a predetermined course for the refrigerant temperature and/or pressure during the cycle.

Preferably, the step of adjusting the course of the speed or of the power during the drying cycle is carried out in order to maintain the refrigerant temperature and/or pressure substantially constant during the drying cycle.

Opportunely, the step of adjusting the course of the speed or of the power during the drying cycle is carried out in order to maintain the refrigerant temperature and/or pressure below a safety temperature level.

In a further preferred embodiment of the invention, the step of adjusting the course of the speed or of the power during the drying cycle is based on the drying air temperature.

Preferably, the step of adjusting the course of the speed or of the power during the drying cycle is based on the drying air temperature at the drum inlet.

In a further aspect the present invention relates to a laundry drying machine suited to implement the method above described.

### BRIEF DESCRIPTION OF THE DRAWINGS

Further characteristics and advantages of the present invention will be highlighted in greater detail in the following detailed description of preferred embodiments of the invention, provided with reference to the enclosed drawings. In said drawings:
- Figure 1 shows a perspective view of a laundry drying machine with a heat pump system according to a preferred embodiment of the invention;
- Figure 2 illustrates a schematic diagram of the laundry drying machine of Figure 1;
- Figure 3 illustrates a schematic diagram of the compressor speed and of the fan speed as a function of the time according to the preferred embodiment of the present invention;
- Figures 4 to 9 illustrate further embodiments of the diagram of Figure 3.

### DETAILED DESCRIPTION OF THE INVENTION

The present invention has proved to be particularly successful when applied to a front-loading laundry drying machine with a rotatable laundry container; however it is clear that the present invention can be applied as well to a top-loading laundry drying machine and also to laundry drying machines of cabinet type, i.e. laundry drying machines where the laundry container does not rotate. Furthermore, the present invention can be usefully applied to all the machines requiring a drying phase for wetted clothes, as for example a combined laundry washing and drying machine.

In the present description the term "laundry drying machine" will refer to both simple laundry drying machines and laundry washing-drying machines.

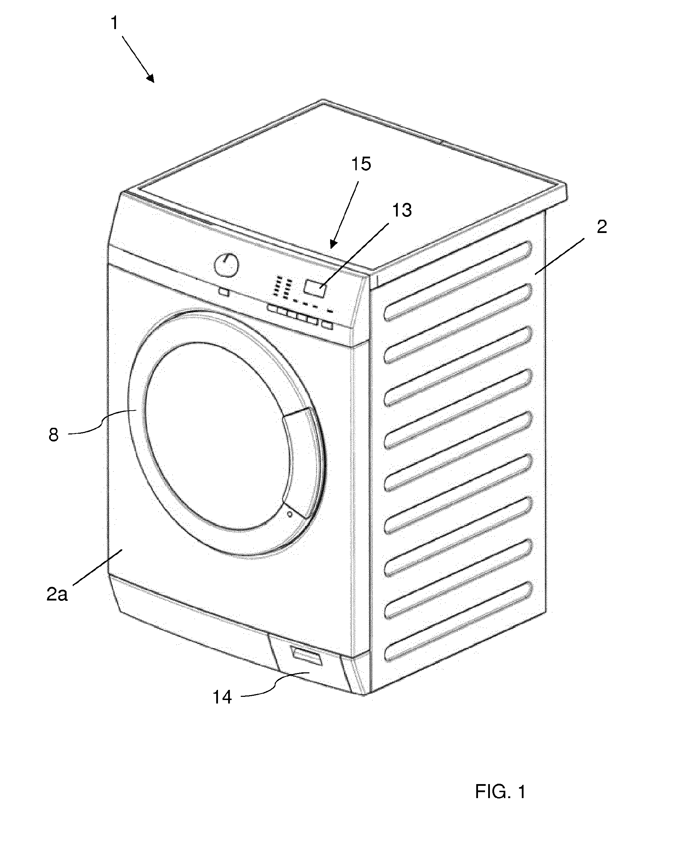

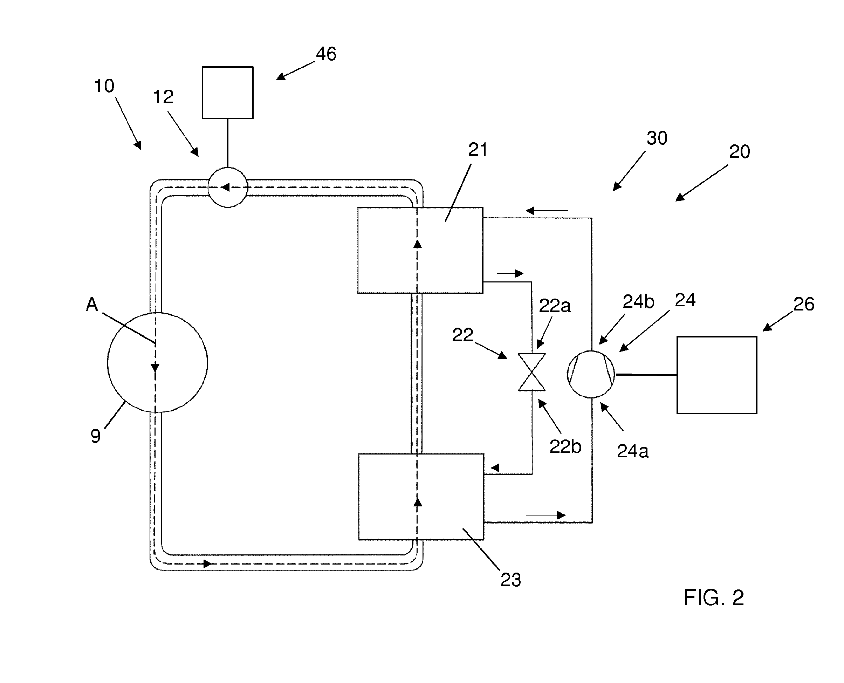

Figures 1 and 2 illustrate a laundry drying machine 1, or laundry dryer, with a heat pump system 20 according to a first embodiment of the present invention.

The laundry dryer 1 preferably comprises, though not necessarily, a substantially parallelepiped-shaped outer boxlike casing 2 which is preferably structured for resting on the floor. A laundry container comprising a rotatably drum 9 is provided within the casing 2. A front door 8, pivotally coupled to the front upright side wall 2a, is provided for allowing access to the drum interior region to place laundry to be dried therein.

The drum 9 is advantageously rotated by a drum motor, preferably an electric motor, which preferably transmits the rotating motion to the shaft of the drum 9, advantageously by means of a belt/pulley system. In a different embodiment of the invention, the drum motor can be directly associated with the shaft of the drum 9.

A user control interface 15 is preferably arranged on the top of the casing 2. The user control interface 15 is preferably accessible to the user for the selection of the drying cycle and insertion of other parameters, for example the type of fabric of the load, the degree of dryness, etc.. The user control interface 15 preferably displays machine working conditions, such as the remaining cycle time, alarm signals, etc. For this purpose the user control interface 15 preferably comprises a display 13.

In different embodiments, for example in a combined laundry washing and drying machine, the user may selects and inserts other types of parameters, for example the washing temperature, the spinning speed, etc..

In further embodiments, the user control interface may be differently realized, for example remotely arranged in case of a remote-control system.

The laundry dryer 1 is provided with a drying air circuit 10, as illustrated in Figure 2, which is structured to circulate inside the drum 9 a volume flow of drying air A.

The drying air A circulates over and through the laundry located inside the drum 9 to dry the laundry. The drum 9 itself is therefore part of the drying air circuit 10.

The drying air circuit 10 is also structured for drawing moist air from the drum 9, cooling down the moist air leaving the drum 9 so to extract and retain the surplus moisture. The dehumidified air is then heated up to a predetermined temperature preferably higher than that of the moist air arriving from the drum 9. Finally the heated, dehumidified air is conveyed again into the drum 9, where it flows over and through the laundry stored inside the rotatable drum 9 to rapidly dry the laundry, as said above.

The drying air circuit 10 forms therefore a closed-loop for the drying air A, as schematically illustrated with dashed line in Figure 2.

An air conveyance device 12 is preferably arranged along the drying air circuit 10 for generating the volume flow of drying air A.

The air conveyance device 12 preferably comprises a fan. A fan control unit 46 is also provided for controlling the fan 12. In particular, the fan control unit 46 is provided for controlling the fan speed Fs of the fan 12. The fan control unit 46 for controlling the rotation speed Fs of the fan 12 can be part of a central processing unit, not illustrated.

The fan control unit 46 is advantageously provided for varying the rotation speed Fs of the fan 12 between at least two different values, a low rotation speed Fls and a high rotation speed Fhs, or for varying at any desired value the rotation speed Fs of the fan 12, as will be better described below.

In a preferred embodiment of the invention, the fan 12 comprises an electric motor and the control unit 46 comprises an inverter.

The air conveyance device 12 is preferably arranged upstream of the drum 9. In different embodiments, nevertheless, the air conveyance device 12 may be arranged in any place along the drying air circuit 10.

Preferably, and more particularly, the drying air circuit 10 then comprises a dehumidifying unit 23 arranged downstream of the drum 9 and a heater unit 21 arranged downstream of the dehumidifying unit 23 and upstream of the drum 9. It is underlined that in the present application the terms "upstream" and "downstream" are referred to the flowing direction of the air, heated air and/or moist air, during the standard functioning of the laundry dryer; for example saying that the fan is arranged upstream of the drum means that in the standard functioning of the laundry dryer the air firstly passes through the fan and then flows into the drum; saying that the dehumidifying unit is arranged downstream of the drum means that in the standard functioning of the laundry dryer the air firstly circulates inside the drum and then passes through the dehumidifying unit. In the dehumidifying unit 23 the moist air leaving the drum 9 condenses and cools down and the water generated therein is preferably collected in a removable container 14, visible in Figure 1, arranged below the dehumidifying unit 23.

In the preferred embodiment here described, the dehumidifying unit 23 is the evaporator of the heat pump system 20 and the heating unit 21 is the condenser of said heat pump system 20.

Therefore, the evaporator 23 cools down and dehumidifies the moist air coming from the drum 9 and then the condenser 21 heats up the dehumidified air coming from the evaporator 23. The heated air is then conveyed again into the drum 9.

In further embodiments, the drying air circuit may not form a closed-loop. In this case, for example, the drying air may be conveyed to a condenser from outside, then conveyed into the drum, from the drum conveyed to the evaporator and finally expelled to the outside.

The heat pump system 20 with its evaporator 23 and condenser 21, therefore, interacts with the drying air circuit 10. In fact, the drying air circuit 10 and the heat pump system 20 are thermally coupled by the condenser 21 and the evaporator 23.

In particular, the heat pump system 20 advantageously comprises a refrigerant circuit 30 forming a closed-loop circuit where a refrigerant flows.

The refrigerant circuit 30 comprises a compressor 24, a first heat exchanger 21, i.e. the condenser 21 in the preferred embodiment here described, an expansion device 22 and a second heat exchanger 23, i.e. the evaporator 23 in the preferred embodiment here described. The compressor 24, the condenser 21, the expansion device 22 and the evaporator 23 are connected in series to form said closed-loop circuit.

The refrigerant flows in the refrigerant circuit 30 wherein is compressed by the compressor 24, condensed in the condenser 21, expanded in the expansion device 22 and then vaporized in the evaporator 23.

In different embodiments, the first heat exchanger may comprises a gas cooler (instead of the condenser) and the second heat exchanger may comprises a gas heater (instead of the evaporator). In this case the refrigerant is advantageously a gas, such as CO₂, which maintains its gaseous state along all the closed-loop circuit, and in particular in the gas cooler and in the gas heater. In this type of heat pump system the gas temperature changes while passing through the gas cooler and the gas heater.

Generally, the first heat exchanger 21 defines a thermal coupling between the drying air circuit 10 and the refrigerant circuit 30 wherein the temperature of the drying air increases and the temperature of the refrigerant decreases. Analogously, the second heat exchanger 23 defines a further thermal coupling between the drying air circuit 10 and the refrigerant circuit 30 wherein the temperature of the drying air decreases and the temperature of the refrigerant increases.

The portion of the refrigerant circuit 30 comprised between the compressor outlet 24b and the expansion device inlet 22a defines a high-pressure side wherein the refrigerant is compressed at a high pressure (for example 20-30 bars when the refrigerant used is R407c).

On the other hand, the portion of the refrigerant circuit 30 comprised between the expansion device outlet 22b and the compressor inlet 24a defines a low-pressure side wherein the refrigerant is expanded at a low pressure (for example 8-10 bars when the refrigerant used is R407c).

A compressor control unit 26 is also provided for controlling the compressor 24. In particular, the compressor control unit 26 is provided for controlling the rotation speed Cs of the compressor 24. The compressor control unit 26 for controlling the rotation speed Cs of the compressor 24 can be part of a central processing unit, not illustrated.

Preferably, the compressor control unit 26 and the fan control unit 46 communicates one to the other. More preferably, both the compressor control unit 26 and the fan control unit 46 are part of said central processing unit. The central processing unit advantageously manages and controls data from/for said units.

It should to be noted that with rotation speed Cs of the compressor 24 it is meant the rotation speed of a driving motor which is part of the compressor 24.

In a preferred embodiment of the invention, the compressor 24 comprises an electric motor and the compressor control unit 26 comprises an inverter.

Further, the laundry dryer 1 may comprise several kinds of sensor elements, which are not shown in the figures. For example, the sensor elements may be provided for detecting the temperature, the relative humidity and/or the electrical impedance at suitable positions of the laundry dryer 1.

The central processing unit above mentioned is advantageously connected to the various parts of the dryer 1, or peripheral units or sensor elements, in order to ensure its operation.

Typically, the laundry to be dried is first placed inside the drum 9. By operating on the interface unit 15 the user selects the desired drying cycle depending, for example, on the type of laundry textile to dry or on the dryness degree of the laundry which is expected at the end of the program, for example totally dry or with residual moisture for a best ironing.

Once the user has selected the desired drying cycle, the central processing unit sets the laundry drying machine 1 so that it starts the drying cycle.

In a further embodiment, the selection of the desired drying cycle may be performed before placing the laundry into the drum 9.

The drying cycle is preferably defined by controlling many parameters which allows the laundry to be dried according to the user selection.

Parameters which typically defines a drying cycle are: the drum rotation speed and its rotational direction of rotation; the performance of the heat pump system 20, in particular the rotation speed Cs or the power Cp of the compressor 24; the volume flow of the drying air A in the drying air circuit 10.

In particular, once the user has selected the desired drying cycle, the central processing unit sets the course of the compressor speed Cs over the time until the drying cycle ends.

For the purpose of the present invention, by "course" it is meant a trend over the time.

Alternatively, the central processing unit sets the course of the compressor power Cp over the time until the drying cycle ends.

In preferred embodiments of the drying cycle, the compressor speed Cs or the compressor power Cp is adjusted during the time, according to the evolution of the cycle.

Preferred criteria for determining the courses of the compressor speed Cs or of the compressor power Cp in a drying cycle will be better described later.

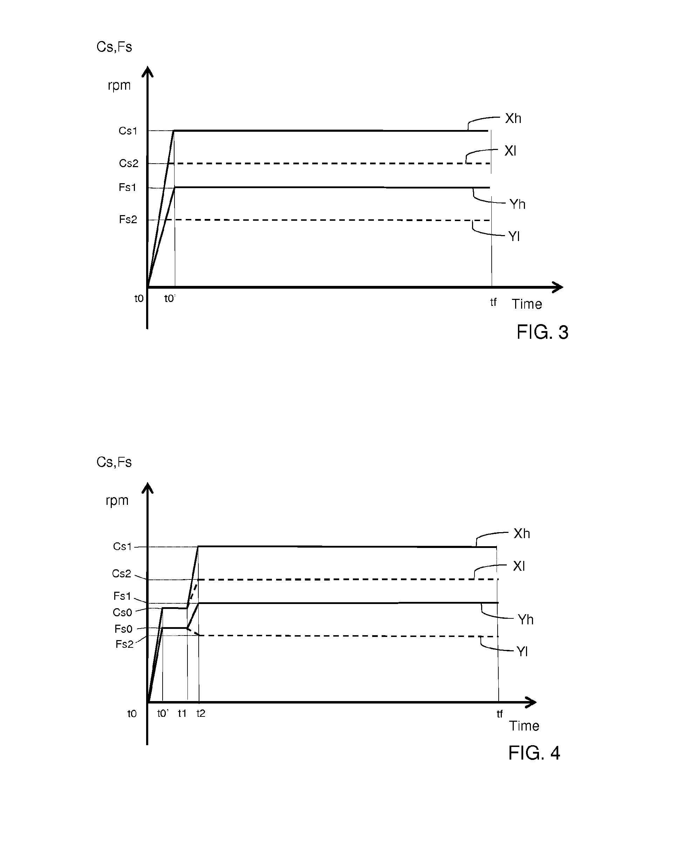

According to the method of the invention, the volume flow of the drying air A in the drying air circuit 10 is controlled on the base of the performance of the heat pump system 20. In particular, the volume flow of the drying air A in the drying air circuit 10 is controlled on the base of the rotation speed Cs or of the power Cp of the compressor 24. More particularly, the fan speed Fs is controlled on the base of the rotation speed Cs or of the power Cp of the compressor 24. Preferably, the volume flow of the drying air A in the drying air circuit 10 is increased if the rotation speed Cs or the power Cp of the compressor 24 is high. On the contrary, the volume flow of drying air A in the drying air circuit 10 is decreased if the rotation speed Cs or the power Cp of the compressor 24 is low. A course of the volume flow of the drying air A on the base of the heat pump performance in a drying cycle according to a first preferred embodiment of the invention is illustrated in Figure 3.

In the graph, the volume flow of the drying air A is identify by the fan speed Fs, while the heat pump performance is identify by the compressor speed Cs. In an alternative representation, the heat pump performance may be identify by the compressor power Cp.

As illustrated in Figure 3, during the drying cycle the compressor speed Cs preferably comprises an acceleration phase (from time t0 to time t0') and a successive phase (from time t0' to time tf) at a steady speed Cs1 which lasts for the entire drying cycle, i.e. up to the final time tf. Such compressor speed course is indicated with letter "Xh" in Figure 3.

Analogously, during the drying cycle the fan speed Fs comprises an acceleration phase (from time t0 to time t0') and a successive phase (from time t0' to time tf) at a steady speed Fs1 which lasts for the entire drying cycle, i.e. up to the final time tf.

Such fan speed cycle is indicated with letter "Yh" in Figure 3.

According to the invention, if the compressor speed cycle which is performed in the drying cycle is different, for example the compressor speed cycle indicated with letter "Xl" in the graph of Figure 3, a different corresponding fan speed cycle is performed, as indicated with letter "Yl" in the same figure.

More particularly, if the steady speed phase of the compressor speed cycle takes place at a lower speed Cs2, then the steady speed phase of the fan speed cycle takes place at a lower speed Fs2.

Therefore, according to the invention, the fan speed Fs1 is high if the compressor speed Cs1 is high and the fan speed Fs2 is lower if the compressor speed Cs2 is lower.

With reference to this embodiment, the choice between the two cycles, i.e. between the high level cycle (Xh and Yh) and the low level cycle (Xl and Yl), may be carried out at the beginning of the drying cycle, preferably before the compressor 24 is activated (i.e. before time t0).

The choice between the two cycles may be preferably performed according to any of the methods described later.

A further embodiment of the course of the compressor speed Cs and of the fan speed Fs is illustrated in figure 4.

Here, the compressor speed Cs preferably comprises an acceleration phase (from time t0 to time t0'), a first phase (from time t0' to time t1) at a steady speed Cs0, a second phase (from time t1 to time t2) during which the speed Cs increase and a third phase (from time t2 to time tf) during which the compressor 24 is driven at a steady high speed Cs1 higher than the steady speed Cs0 of the first phase. Such compressor speed cycle is indicated with letter "Xh".

Analogously, during the drying cycle the fan speed Fs comprises an acceleration phase (from time t0 to time t0'), a first phase (from time t0' to time t1) at a steady speed Fs0, a second phase (from time t1 to time t2) during which the speed Fs increase and a third phase (from time t2 to time tf) during which the fan is driven at a steady high speed Fs1 higher than the steady speed Fs0 of the first phase.

Such fan speed cycle is indicated with letter "Yh" in Figure 4.

The first phase (t0'÷t1) may, preferably, last a long period of time, for example 20-30 min, during which the temperatures of the drying air stream A and of the heat pump system 20, which are usually at the ambient temperature when the laundry dryer 1 starts to operate, increase up to desired levels. This phase may also be called warm-up phase.

According to the invention, if the compressor speed cycle which is performed in the drying cycle is different, for example the compressor speed cycle indicated with letter "X1" in the graph of Figure 4, then a different corresponding fan speed cycle is performed, as indicated with letter "Yl" in the same figure.

More particularly, if the second steady speed phase (t2÷tf) of the compressor speed cycle takes place at a lower speed Cs2, then the second steady speed phase of the fan speed cycle takes place at a lower speed Fs2.

Therefore, according to the invention, the fan speed Fs1 is high if the compressor speed Cs1 is high and the fan speed Fs2 is lower if the compressor speed Cs2 is lower.

With reference to this embodiment, the choice between the two cycles, i.e. between the high level cycle (Xh and Yh) and the low level cycle (Xl and Yl), may be carried out again at the beginning of the drying cycle, preferably before the compressor 24 is activated (i.e. before time t0), as in the preferred embodiment previously described.

Alternatively, the choice between the two cycles, i.e. between the high level cycle (Xh and Yh) or the low level cycle (Xl and Yl), may be preferably carried out during the acceleration phase (t0÷t0') or even better during the first phase (t0'÷t1) of the drying cycle or, in other words, after the compressor 24 has been activated. In fact, as said before, the first phase (warm-up phase) may last a lot, for example 20min, so that the determination of the proper cycle may be carried out without wasting of time during this warm-up phase.

Figures from 5 to 9 show further courses of the compressor speed cycle and of the corresponding fan speed cycle according to further preferred embodiments of the invention.

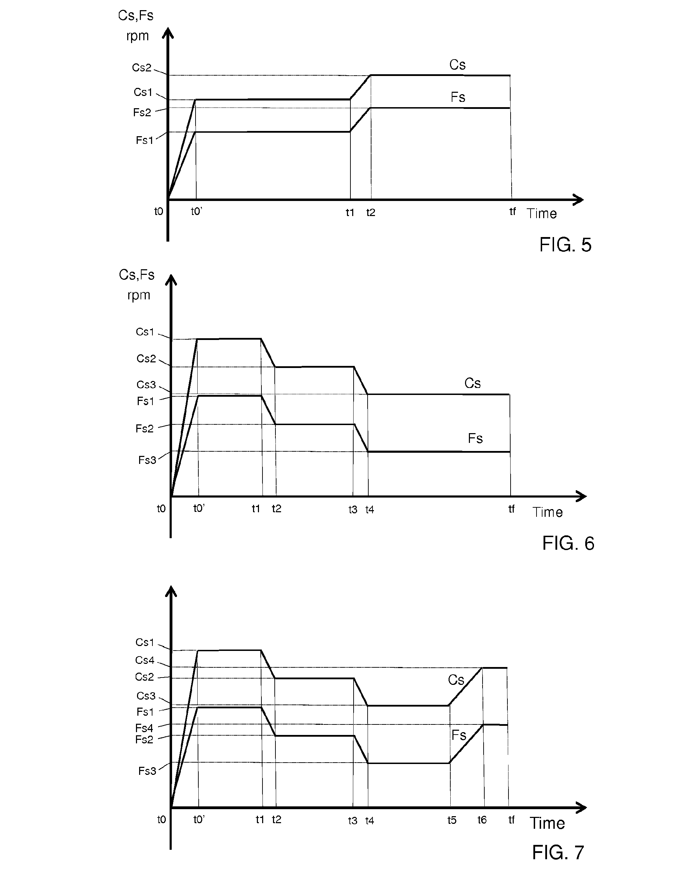

The course of Figure 5 differs from the previous embodiment illustrated in Figure 3 for the fact that it comprises two successive phases (t0'÷t1 and t2÷tf) at steady speed (Cs1 and Cs2) for the compressor 24 and corresponding phases (t0'÷t1 and t2÷tf) at steady speed (Fs1 and Fs2) for the fan 12. In the second phase (t2÷tf) the compressor speed Cs is increased and the fan speed Fs is also increased, according to the idea of the present invention.

In this embodiment, the fan speed Fs is advantageously adjusted on the base of the compressor speed Cs during the same drying cycle.

The course of Figure 6 differs from the previous embodiment illustrated in Figure 3 for the fact that it comprises successive phases, (t0'÷t1; t2÷t3 and t4÷tf) at steady speed (Cs1, Cs2 and Cs3) for the compressor 24 and corresponding phases, (t0'÷t1; t2÷t3 and t4÷tf) at steady speed (Fs1, Fs2 and Fs3) for the fan 12. In said phases, the compressor speed Cs is decreased and the fan speed Fs is also decreased, according to the idea of the present invention.

Here again, the fan speed Fs is advantageously adjusted on the base of the compressor speed Cs during the same drying cycle.

The course of Figure 7 differs from the previous embodiment illustrated in Figure 6 for the fact that it further comprises a final phase (t6÷tf) at steady speed (Cs4) for the compressor 24 and a corresponding final phase (t6÷tf) at steady speed (Fs4) for the fan 12. In the different successive phases, the compressor speed Cs decreases and increases while the fan speed Fs also decreases and increases, according to the idea of the present invention.

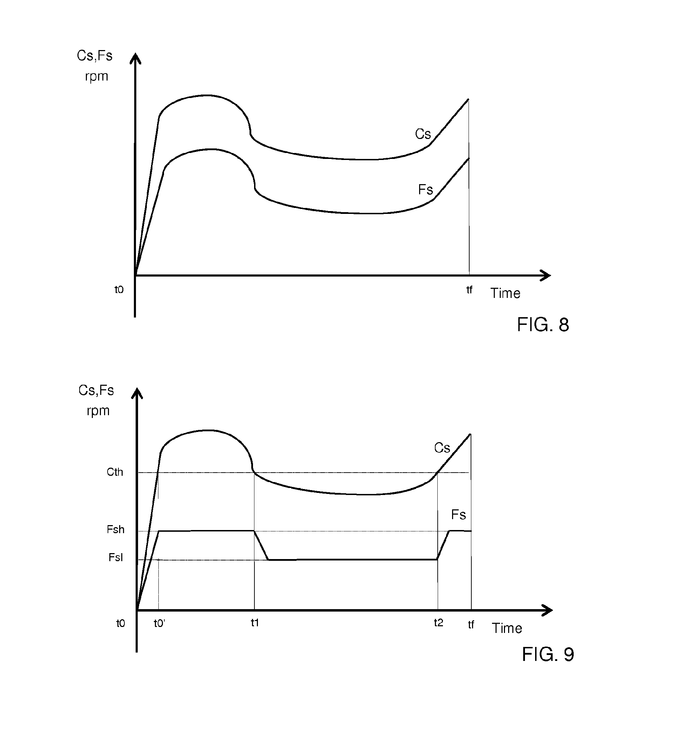

As illustrated above, the fan speed Fs substantially follows the course of the compressor speed Cs. Both the courses of the fan speed Fs and of the compressor speed Cs may also vary continuously during the time, as illustrated for example in Figure 8. This is preferably obtained by opportunely driving the compressor 24 and the fan 12 by means of an inverter.

Figure 9 show a further preferred embodiment of the invention. Figure 9 show both the courses of the fan speed Fs and of the compressor speed Cs. The compressor speed course here illustrated is the same above illustrated in Figure 8. According to the invention, the fan speed Fs is set according to the compressor speed Cs. In particular, if the compressor speed Cs is lower than a predetermined threshold value Cth, then the fan speed Fs is set at a low value Fs1 and if the compressor speed Cs is higher than, or equal to, said threshold value Cth then the fan speed Fs is set at a high value Fsh.

More generally, the flow volume of the drying air A is set according to the compressor speed Cs. In particular, if the compressor speed Cs is lower than a predetermined threshold Cth, then the flow volume of the drying air A is set at a low value and if the compressor speed Cs is higher than, or equal to, said predetermined threshold Cth then the flow volume of the drying air A is set at a high value.

This effect may be obtained, for example, varying the fan motor speed by means of an inverter.

In a further preferred embodiment, this effect may be obtained, for example, using two air fans, instead of only one, which are activated separately.

To obtain the low flow volume only one fan may be advantageously activated. To obtain the high flow volume, both the fans may be advantageously activated. In further preferred embodiments, more than one threshold value may be provided, thus defining corresponding ranges for the compressor speed Cs. When the compressor speed Cs falls inside one of said ranges, then a prefixed corresponding value for the fan speed Fs is selected.

The following table shows, for example, such a correlation between the compressor speed Cs and the fan speed Fs:

| Compressor speed Cs: | Fan speed Fs: |
|---|---|
| less than 2100 rpm | 2500 rpm |
| 2100÷2300 rpm | 2700 rpm |
| 2300÷2500 rpm | 2900 rpm |
| 2500÷2700 rpm | 3100 rpm |

The correlation between the compressor speed Cs and the fan speed Fs is stored as a function or as a table in a memory of the fan control unit 46 and/or of the compressor control unit 26 and/or of the central processing unit. According to this function or table, every value of the fan speed Fs is related to the compressor speed Cs of the compressor 24.

More the compressor speed Cs is and more the fan speed Fs is.

While the embodiments of the invention has been described only with reference to the rotation speed Cs of the compressor 24, it is clear that the same applies if the power Cp of the compressor 24 is considered.

Advantageously, according to the invention, the air volume of drying air A is set on the base of the compressor speed Cs or the compressor power Cp level.

The idea is to match the proper air volume of drying air A with the heat pump 20 working condition, in particular with the compressor 24 working condition.

When the compressor 24 is driven at high speed/power level, the air volume of drying air A, i.e. the fan speed Fs, is also increased to a high flow rate value. In fact, if the compressor 24 is driven at high speed/power level, a high refrigerant flow rate is moved by the compressor 24 inside the refrigerant circuit 30. Advantageously, a high flow rate of the drying air A allows the heat pump 30 working in more favourable conditions. In fact, as described above, the drying air A circulates in the drying air circuit 10 and exchanges thermal energy with the refrigerant of the refrigerant circuit 30 through the condenser 21 and the evaporator 23. In such condition, therefore, the thermal exchanges in the condenser 21 and in the evaporator 23 are optimized thus reducing energy consumption.

Moreover, a high flow rate of the drying air A allows condensation of all, or substantially all, the refrigerant in the condenser 21. Analogously, a high flow rate of the drying air A allows evaporation of all, or substantially all, the refrigerant in the evaporator 23. This further optimizes the heat pump performance and reduces energy consumption.

Furthermore, since all the refrigerant leaving the evaporator 23 evaporates, then the absence of liquid in the refrigerant is guaranteed before it reaches the compressor 24. The absence of liquid in the refrigerant ensures the correct functioning of the compressor 24.

On the contrary, when the compressor 24 is driven at low speed/power level, the air volume of drying air A, i.e. the fan speed Fs, is also decrease to a low flow rate value. If the compressor 24 is driven at low speed/power level, a low refrigerant flow rate is moved by the compressor 24 inside the refrigerant circuit 30.

Therefore, a high flow rate value for drying air A would not exchange a high quantity of thermal energy with the refrigerant in the exchangers 21, 23, while consuming an additional amount of energy. At the same time, the drying effect on the laundry would not be improved.

On the contrary, a low flow rate value for drying air A optimizes the thermal energy exchange with the refrigerant and also reduces power consuming of the fan.

Advantageously, the total energy dissipated in the drying cycle is reduced with additional saving of energy.

Advantageously, the fan speed is adapted and optimized to suit variations of the speed or of the power of the compressor during the drying cycle.

Hereinafter some possible criteria for determining the course of the compressor speed Cs, or of the compressor power Cp, in a drying cycle are described.

In a first preferred embodiment of the invention, the compressor speed Cs is determined on the base of the drying cycle selected by the user through the user control interface 15.

For example, the user may select an "economic cycle" or a "fast cycle".

In case an "economic cycle" is selected, the compressor speed Cs may be maintained substantially constant during the time. In case a "fast cycle" is selected, on the contrary, the compressor speed Cs may comprises peaks of high intensity. This reduces the cycle duration, while the power consumption increases.

In another preferred embodiment of the invention, the compressor speed Cs is determined on the base of the type of laundry textile to dry (cotton, wool, delicate, etc.)

The type of laundry textile is advantageously selected by the user through the user control interface 15.

In another preferred embodiment of the invention, the compressor speed Cs is determined on the base of the dryness degree of the laundry which is expected at the end of the drying cycle, for example totally dry or with residual moisture for a best ironing.

The dryness degree is advantageously selected by the user through the user control interface 15.

In another preferred embodiment of the invention, the compressor speed Cs is determined on the base of the humidity degree of the laundry at the beginning of the drying cycle.

The humidity degree is advantageously detected and/or estimated at the beginning of the drying cycle through humidity sensors of the laundry. Alternatively, the humidity degree is advantageously selected by the user through the user control interface 15.

In another preferred embodiment of the invention, the compressor speed Cs is determined on the base of the amount of load inside the drum 9.

The amount of load, typically the weight of the laundry to be dried, may be advantageously selected by the user through the user control interface 15. Alternatively, the amount of load is detected and/or estimated automatically by evaluating working parameters of the laundry drier 1.

Some possible criteria for detecting/estimating the amount of load which may be advantageously performed in the method of the invention are hereafter described. In a first preferred embodiment of the invention, the amount of load W in the laundry drum may be directly detected by a weight sensor associated to the drum. In another embodiment of the invention, the amount of load may be determined by measuring the electrical parameters of the electric drum motor, like the electric current and/or the induced voltage. The electrical current through the electric drum motor is at least approximately proportional to the torque of the electric drum motor. For example, the electric current measured gives a measure of the torque of the electric drum motor and from the torque the amount of load is determined.

In further embodiment, the torque of the electric drum motor may be detected and/or calculated differently, for example by means of a torque sensor associated to the drum motor.

The amount of load in the laundry drum may be further detected by the temperature difference of the air stream between an inlet and outlet of the laundry drum. The temperature difference of the inlet and outlet of the laundry drum is related to the amount of water extracted from the laundry and decreases in the case of a small heat exchange between the air stream and the laundry. Further, also the temperature of the air stream at the outlet of the laundry drum can be used alone for estimating the amount of load in the laundry drum.

In further embodiment, the amount of load in the laundry drum may be further detected by the temperature difference of the air stream between an inlet and outlet of the evaporator.

Moreover, the amount of load may be estimated by measuring the electric resistance and/or conductivity of the wet laundry.

In this case, the amount of load in the laundry drum may be detected by using two electrodes associated to the laundry drum.

The electrodes are advantageously parts of a conductimetric system. Said conductimetric system may be provided for detecting both the dryness degree of the laundry inside the drum and for estimating the amount of load in the laundry drum. For this purpose a level of electrical noise and/or fluctuation during the first minutes of a drying cycle is used. The wet load can connect electrically the first electrode to the second electrode, when a part of the wet load touches simultaneously the first electrode and the second electrode. If the wet load in the laundry drum does not touch simultaneously the first electrode and the second electrode, then a peak is detected by the conductimetric system.

It has been found that there is a correlation between the number or frequency of peaks of the electric signal and the amount of load in the laundry drum. The smaller the load inside the laundry drum is, the higher the number or frequency of the detected peaks is, and the higher is an electrical noise measured by the conductimetric system.

Further, it has been found that the area subtended by peaks of an electric signal corresponding to the detected electric resistance and/or conductivity increases with a decreasing amount of load in said laundry drum and similarly the value of peaks of an electric signal corresponding to the detected electric resistance and/or conductivity increases with a decreasing amount of load in said laundry drum.

In another preferred embodiment of the invention, the compressor speed Cs is determined on the base of the ambient temperature at the beginning of the drying cycle.

The compressor speed courses may depends, in fact, on the external conditions where the laundry drier is placed.

The ambient temperature at the beginning of the drying cycle may be advantageously detected and/or estimated through a dedicated temperature sensor or through any of the temperature sensors arranged in the laundry drier 1. Therefore, as described above, the compressor speed course is typically determined at the beginning of the drying cycle.

The compressor speed course is therefore preferably determined only one time at the beginning of the drying cycle.

The drying cycle then will continue according to the predetermined course chosen.

In further preferred embodiments of the invention, nevertheless, the compressor speed Cs is advantageously adjusted during the drying cycle.

In a first preferred embodiment of the invention, the compressor speed Cs is adjusted on the base of the refrigerant temperature and/or pressure in the refrigerant circuit 30.

More preferably, the compressor speed Cs is adjusted on the base of the refrigerant temperature and/or pressure in the high-pressure side of the refrigerant circuit 30.

In particular, the compressor speed Cs is adjusted on the base of the refrigerant temperature and/or pressure at the compressor outlet 24b or at the condenser output.

Alternatively, the compressor speed Cs is adjusted on the base of refrigerant temperature and/or pressure at the input of the expansion device 22 of the refrigerant circuit 30.

Preferably, the compressor speed Cs is adjusted in order to maintain the refrigerant temperature and/or pressure within a predetermined range during the cycle.

For example, the courses of the compressor speed Cs shown in Figures 7 and 8 may be performed to maintain the refrigerant temperature and/or pressure within a predetermined range. It is clear that during the drying cycle the compressor speed Cs varies, i.e. increases and/or decreases. In the final phase of the drying cycle, for example, the refrigerant temperature and/or pressure may be preferably increased in order to enhance the extraction of the residual moisture from the laundry. During this final phase the compressor speed Cs increases accordingly. In a preferred embodiment, the compressor speed Cs is adjusted in order to maintain the refrigerant temperature and/or pressure in the high-pressure side of the refrigerant circuit within a predetermined range during the cycle.

For example, the compressor speed Cs is adjusted in order to maintain the refrigerant temperature and/or pressure substantially constant during the cycle. This optimizes the performance of the heat pump system 20.

In further embodiments, the compressor speed Cs is adjusted in order to determine a predetermined course for the refrigerant temperature and/or pressure during the cycle.

Still preferably, the compressor speed Cs is adjusted in order to maintain the refrigerant temperature and/or pressure below a safety temperature level. In particular, the compressor speed Cs is adjusted in order to maintain the refrigerant temperature and/or pressure at the compressor inlet 24a or at the compressor outlet 24b below a safety temperature level.

The refrigerant temperature may be advantageously detected and/or estimated through a dedicated temperature sensor associated to the refrigerant circuit 30.

In another preferred embodiment of the invention, the compressor speed Cs is adjusted on the base of the drying air temperature, preferably on the base of the drying air temperature at the drum inlet.

Preferably, the compressor speed Cs is adjusted in order to maintain the drying air temperature at the drum inlet substantially constant during the cycle.

For example, if the user selects a "wool cycle", i.e. a drying cycle for clothes made of wool, the air temperature at the drum inlet may be preferably maintain at low values, for example about 50°C.

It has thus been shown that the present invention allows the set object to be achieved. In particular, it makes it possible to obtain a drying cycle which allow an additional saving of energy compared to machines of known type.

Although illustrative embodiments of the present invention have been described herein with reference to the accompanying drawings, it is to be understood that the present invention is not limited to those precise embodiments, and that various other changes and modifications may be affected therein by one skilled in the art without departing from the scope or spirit of the invention. For example, one or more auxiliary heat exchangers may be associated to the air drying circuit and/or to the refrigerant circuit of the invention. All such changes and modifications are intended to be included within the scope of the invention as defined by the appended claims.

## Claims

1. A method for controlling a laundry drying machine (1) of the type comprising a heat pump system (20) having a refrigerant circuit (30) for a refrigerant and comprising a drying air circuit (10) for conveying a volume flow of drying air (A) in a laundry drum (9) suitable for receiving laundry to be dried, said refrigerant circuit (30) comprising:
- a compressor (24) with a variable rotation speed (Cs);
- a first heat exchanger (21) for a thermal coupling between said drying air circuit (10) and said refrigerant circuit (30) wherein the temperature of said drying air (A) increases and the temperature of said refrigerant decreases; and
- a second heat exchanger (23) for a further thermal coupling between said drying air circuit (10) and said refrigerant circuit (30) wherein the temperature of said drying air (A) decreases and the temperature of said refrigerant increases; **characterized in that** said method comprises the steps of:
- controlling the speed (Cs) or the power (Cp) of said compressor (24);
- controlling said volume flow of said drying air (A) in response to said speed (Cs) or said power (Cp) of said compressor (24).

2. The method according to claim 1, **characterized in that** said step of controlling said volume flow of drying air (A) comprises the step of increasing said volume flow of drying air (A) if said speed (Cs) or said power (Cp) of said compressor (24) increases.

3. The method according to claim 1, **characterized in that** said step of controlling said volume flow of drying air (A) comprises the step of decreasing said volume flow of drying air (A) if said speed (Cs) or said power (Cp) of said compressor (24) decreases.

4. The method according to claim 1, **characterized in that** said step of controlling said volume flow of drying air (A) comprises the step of conveying a first volume flow of drying air (A) in said drying air circuit (10) if said speed (Cs) or said power (Cp) of said compressor (24) is lower than a predetermined threshold value and conveying a second volume flow of drying air (A) if said speed (Cs) or said power (Cp) of said compressor (24) is higher than, or equal to, said predetermined threshold value, wherein said first volume flow of drying air (A) is lower than said second volume flow of drying air (A).

5. The method according to claim 1, **characterized in that** two or more ranges for said speed (Cs) or said power (Cp) are defined and corresponding two or more values for said volume flow of drying air (A) are set, wherein if said speed (Cs) or said power (Cp) of said compressor (24) is comprised in a first range which has smaller values than the values of a second range then the correspondent first value of said volume flow is set at a value smaller than the value of the correspondent second value of said volume flow.

6. The method according to any preceding claim, **characterized in that** said step of controlling said volume flow of said drying air (A) comprises the step of controlling a conveying device (12) arranged in said drying air circuit (10).

7. The method according to claim 6, **characterized in that** said step of controlling said volume flow of said drying air (A) comprises the step of controlling the speed of a fan arranged in said drying air circuit (10).

8. The method according to any preceding claim, **characterized in that** said step of controlling the speed (Cs) or the power (Cp) of said compressor (24) comprises the step of driving said compressor (24) according to a course of said speed (Cs) or of said power (Cp).

9. The method according to claim 8, **characterized in that** said step of driving said compressor (24) according to a course of said speed (Cs) or of said power (Cp) comprises the step of driving said compressor (24) according to a predetermined course of said speed (Cs) or of said power (Cp).

10. The method according to claim 9, **characterized in that** said predetermined course is selected at the beginning of the drying cycle.

11. The method according to claim 9, **characterized in that** said predetermined course is selected within a predetermined time interval at the beginning of the drying cycle.

12. The method according to claim 9, **characterized in that** said predetermined course is selected before the activation of said compressor (24).

13. The method according to claim 9, **characterized in that** said predetermined course is selected after the activation of said compressor (24).

14. The method according to claim 8, **characterized in that** said course is determined on the base of the drying cycle selected by the user through a user control interface.

15. The method according to claim 8, **characterized in that** said course is determined on the base of one of the following: the type of laundry textile to dry;
the dryness degree of the laundry which is expected at the end of the drying cycle; the humidity degree of the laundry at the beginning of the drying cycle; the amount of load inside said drum; the ambient temperature at the beginning of the drying cycle.

16. The method according to claim 8, **characterized in that** said step of driving said compressor (24) according to a course of said speed (Cs) or of said power (Cp) comprises the step of driving said compressor (24) according to a course of said speed (Cs) or of said power (Cp) which is adjusted during the drying cycle.

17. The method according to claim 16, **characterized in that** said step of adjusting the course of said speed (Cs) or of said power (Cp) during the drying cycle is based on one of the following: the refrigerant temperature and/or pressure in said refrigerant circuit (10); the refrigerant temperature and/or pressure at the compressor outlet (24b) or at the first heat exchanger output; the drying air temperature; the drying air temperature at the drum inlet.

18. The method according to claim 16, **characterized in that** said step of adjusting the course of said speed (Cs) or of said power (Cp) during the drying cycle is carried out in order to: maintain the refrigerant temperature and/or the pressure within a predetermined range during the drying cycle; or determine a predetermined course for the refrigerant temperature and/or pressure during the cycle; or maintain the refrigerant temperature and/or pressure substantially constant during the drying cycle; or maintain the refrigerant temperature and/or pressure below a safety temperature level.

19. A laundry drying machine (1) suited to implement a method according to any of the preceding claims.
